# EUROPÄISCHE PATENTANMELDUNG

(11) **EP 4 781 822 A1**
(43) Veröffentlichungstag der Anmeldung: **29.07.2026**
(21) Anmeldenummer: 26153503.3
(22) Anmeldetag: 22.01.2026
(51) Int. Cl.: A01K 5/01, A01K 1/10

(54) **FUTTERBODEN FÜR EINEN FUTTERSTAND ZUR FÜTTERUNG VON TIEREN, FUTTERSTAND UND STALLBOX**

(30) Priorität: 24.01.2025 DE 102025102637
(71) Anmelder: Poleschak, Ingo, 85716 Unterschleißheim (DE)
(72) Erfinder: Poleschak, Ingo, 85716 Unterschleißheim (DE); Gerzabek, Bianca, 82393 Iffeldorf (DE)
(74) Vertreter: Ege Lee & Roider Patentanwälte

(57) **Zusammenfassung**

Futterboden (100, 400) für einen Futterstand (200) zur Fütterung von Tieren, insbesondere von Pferden, umfassend zumindest ein Bodenelement (102), das zum Abtrennen eines Futteraufnahmeraums (104) von einem Partikelaufnahmeraum (106) ausgebildet ist, wobei das zumindest eine Bodenelement (102) eine dem Futteraufnahmeraum (104) zugewandte Futteraufnahmefläche (108) zur Aufnahme eines Futtermittels und wenigstens eine Ausnehmung (112, 402, 500) aufweist, die sich derart von der Futteraufnahmefläche (108) zu einer der Futteraufnahmefläche (108) gegenüberliegenden Fläche (110) erstreckt, dass Partikel aus dem Futteraufnahmeraum (104) in den Partikelaufnahmeraum (106) gelangen, sowie ein Futterstand (200) mit einem solchen Futterboden (100, 400) und eine Stallbox (300), insbesondere Pferdebox (300), mit einem Futterstand (200).

## Beschreibung

Die Erfindung betrifft einen Futterboden für einen Futterstand zur Fütterung von Tieren, insbesondere von Pferden. Außerdem betrifft die Erfindung einen Futterstand zur Fütterung von Tieren, insbesondere von Pferden, und eine Stallbox, insbesondere Pferdebox.

Tiere, wie beispielsweise Pferde, sind mehrere Stunden pro Tag mit Fressen beschäftigt. Am gesündesten ist es, wenn über den Tag verteilt häufig jeweils kleine Mengen Futter zu sich genommen wird. In ihrer natürlichen Haltung nehmen Pferde die Nahrung bodennah mit dem Maul und den Lippen auf. Diese Haltung sollte bei Fütterungseinrichtungen in Pferdestallungen berücksichtigt werden. Zur individuellen Futterversorgung von Pferden haben sich bei der Gruppentierhaltung in Pferdestallungen Futterstände, insbesondere für Rauh- und Grünfutter, etabliert.

Bei den bekannten Futterständen hat sich herausgestellt, dass es beim Fressen zu einer erheblichen Staubbelastung für das Pferd kommt. Der vom Futtermittel stammende Staub und sonstige Fremd- oder Schmutzpartikel werden beim Fressen aufgewirbelt und eingeatmet. Auch sammeln sich solche Partikel überwiegend am Boden des Futterstands an. Durchsuchen die Pferde nun den Futterstandboden nach Futterresten, werden dabei unvermeidlich Staub und Fremdpartikel eingeatmet. Solche Partikel können auch Träger von Pilzsporen, Viren oder Bakterien sein. All diese Partikel können über die Atemwege des Pferdes aufgenommen werden und auf diese Weise dem Pferd erhebliche gesundheitliche Schäden zufügen. Atemwegserkrankungen oder sonstige Erkrankungen können die Folge sein.

Der Erfindung liegt die Aufgabe zugrunde, einen eingangs genannten Futterboden strukturell und/oder funktionell zu verbessern. Außerdem liegt der Erfindung die Aufgabe zugrunde, einen eingangs genannten Futterstand strukturell und/oder funktionell zu verbessern. Ferner liegt der Erfindung die Aufgabe zugrunde, eine eingangs genannte Stallbox strukturell und/oder funktionell zu verbessern.

Es ist daher eine Aufgabe der vorliegenden Erfindung, einen Futterboden und damit auch einen Futterstand, insbesondere für eine Stallbox, bereitzustellen, der eine durch Staub- oder Fremdpartikel verursachte Gesundheitsgefährdung für das zu fütternde Tier deutlich reduziert.

Die Aufgabe wird gelöst mit einem Futterboden mit den Merkmalen des Anspruchs 1. Außerdem wird die Aufgabe gelöst mit einem Futterstand mit den Merkmalen des Anspruchs 11. Des Weiteren wird die Aufgabe gelöst mit einer Stallbox mit den Merkmalen des Anspruchs 14. Vorteilhafte Ausführungen und/oder Weiterbildungen sind Gegenstand der Unteransprüche, der Beschreibung und/oder den begleitenden Figuren.

Sowohl die in den Patentansprüchen angegebenen Merkmale als auch die in den nachfolgenden Ausführungsbeispielen der erfindungsgemäßen Vorrichtung angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Gemäß einem Aspekt ist ein Futterboden für einen Futterstand zur Fütterung von Tieren, insbesondere von Pferden, vorgesehen. Der Futterboden kann zur Anordnung in einem Futterstand ausgebildet sein. Beispielsweise kann der Futterboden einen Zwischenboden des Futterstandes bilden. In einer Variante kann der Futterboden aus Holz und/oder Metall und/oder Kunststoff und/oder aus einer Kombination von mindestens zwei dieser Materialien hergestellt sein.

Der Futterboden umfasst zumindest ein Bodenelement. Das zumindest eine Bodenelement ist zum Abtrennen eines Futteraufnahmeraums von einem Partikelaufnahmeraum ausgebildet. Das zumindest eine Bodenelement weist eine dem Futteraufnahmeraum zugewandte Futteraufnahmefläche zur Aufnahme eines Futtermittels auf. Ferner weist das zumindest eine Bodenelement wenigstens eine Ausnehmung auf, die sich derart von der Futteraufnahmefläche zu einer der Futteraufnahmefläche gegenüberliegenden Fläche erstreckt, dass Partikel aus dem Futteraufnahmeraum in den Partikelaufnahmeraum gelangen. Die der Futteraufnahmefläche gegenüberliegende Fläche kann eine zur Futteraufnahmefläche abgewandte Fläche sein und/oder eine dem Boden des Futterstands zugewandte Fläche sein. In einer bevorzugten Variante können die Futteraufnahmefläche und die der Futteraufnahmefläche gegenüberliegende Fläche parallel zueinander ausgebildet sein.

Unter Futteraufnahmeraum kann ein Raum verstanden werden, in dem Futtermittel, wie beispielsweise Rauh- oder Grünfutter, einem Tier, vorzugsweise einem Pferd, zur Futteraufnahme bereitgestellt werden kann. Der Futteraufnahmeraum und/oder der Partikelaufnahmeraum kann/können beispielsweise durch Seitenwände eines Futterstandes und/oder einer Stallbox begrenzt sein. Die Partikel können Staubund/oder Fremdpartikel sein. Fremdpartikel können Partikel sein, die nicht zum Futtermittel gehören. Beispielsweise kann es sich bei den Partikel um Futterstaub, wie Heustaub, und/oder Schmutzpartikel handeln. Der Partikelaufnahmeraum kann daher auch ein Staubaufnahmeraum und/oder ein Fremdpartikelaufnahmeraum sein. Die Futteraufnahmefläche des Futterbodens kann insbesondere so ausgebildet sein, dass auf dieser das Futtermittel angeordnet werden kann. In einer Variante kann die Futteraufnahmefläche des Futterbodens im Wesentlichen eben und/oder horizontal ausgebildet sein. Die Futteraufnahmefläche kann ferner als Auflagefläche ausgebildet sein, auf die das Futtermittel aufgebracht werden kann. Futtermittel, wie Rauh- oder Grünfutter, kann somit auf der Futteraufnahmefläche positioniert und/oder bereitgestellt werden.

In einer bevorzugten Variante kann die wenigstens eine Ausnehmung als Durchgangsöffnung in dem zumindest einen Bodenelement ausgebildet sein. Die wenigstens eine Durchgangsöffnung kann sich von der Futteraufnahmefläche zu der der Futteraufnahmefläche gegenüberliegenden Fläche erstrecken. Die wenigstens eine Ausnehmung bzw. Durchgangsöffnung kann somit den Futteraufnahmeraum mit dem Partikelaufnahmeraum verbinden, insbesondere so, dass Partikel aus dem Futteraufnahmeraum in den Partikelaufnahmeraum gelangen können. In einer Variante kann die wenigstens eine Ausnehmung als Loch, Schlitz oder als eckiger Durchbruch ausgebildet sein. Das Loch kann beispielsweise ein Kreisloch oder Langloch sein. Ferner kann das Loch auch ein Durchgangsloch sein. In einer weiteren Variante kann die wenigstens eine Ausnehmung zumindest eine Phase und/oder Abrundung aufweisen. Die zumindest eine Phase und/oder Abrundung kann im Bereich der Futteraufnahmefläche und/oder an einem der Futteraufnahmefläche zugewandten Ende der zumindest einen Ausnehmung vorgesehen sein. Damit können scharfkantige Bereiche an der Futteraufnahmefläche vermieden werden, wodurch das Tiermaul, beispielsweise das sensible Pferdemaul, vor Verletzungen während der Futteraufnahme geschützt ist, insbesondere wenn das Tiermaul bei der Futteraufnahme die Futteraufnahmefläche berührt. Die Lippen des Tiermauls können dadurch optimal geschützt werden. Des Weiteren kann dadurch die Staubabfuhr in den Partikelaufnahmeraum noch weiter verbessert werden.

Die zumindest eine Ausnehmung kann beispielsweise ein abgeschrägtes und/oder abgerundetes Loch sein. In einer Variante kann die zumindest eine Ausnehmung ein Phasenloch oder eine Fasenbohrung sein. Unter einem Phasenloch oder einer Fasenbohrung kann eine Bohrung verstanden werden, bei der der Eingangsbereich des Lochs bzw. Bohrung mit einer schrägen Kante, wie eine Abschrägung und/oder Phase, versehen ist. Die schräge Kante und/oder Phase kann einen definierten Winkel aufweisen. Der Winkel kann zwischen 30° und 60° liegen. Beispielsweise kann der Winkel 45° betragen. Ferner kann die schräge Kante und/oder Phase eine Breite von 1 mm bis 10 mm aufweisen. Alternativ kann die schräge Kante und/oder Phase abgerundet sein.

Die abgerundete Kante und/oder Phase und/oder die Abrundung kann einen definierten Radius aufweisen. Der Radius kann zwischen 1 mm und 15 mm, beispielsweise zwischen 3 mm und 12 mm, vorzugsweise zwischen 6 mm und 12 mm, bevorzugt 8 mm, betragen.

Das zumindest ein Bodenelement kann im Wesentlichen als Platte, wie Bodenplatte, ausgebildet sein. Die Platte kann an deren Oberseite die Futteraufnahmefläche und an deren Unterseite die der Futteraufnahmefläche gegenüberliegende Fläche aufweisen. In einer Variante kann das zumindest eine Bodenelement als Lochplatte oder Gitter ausgebildet sein. Ferner kann das zumindest eine Bodenelement im Wesentlichen eckig ausgebildet sein. In einer Variante kann der Futterboden einstückig aus einem einzigen Bodenelement gebildet sein. In einer alternativen Variante können mehrere Bodenelemente vorgesehen sein. Die mehreren Bodenelemente können miteinander verbindbar ausgebildet oder miteinander verbunden sein. Der Futterboden kann daher zwei-, drei-, vier- oder mehrteilig ausgebildet sein.

In einer weiteren Variante kann zumindest ein Halteabschnitt vorgesehen sein. Der zumindest eine Halteabschnitt kann zum Fixieren des zumindest einen Bodenelements an einer Seitenwand ausgebildet sein. Bei der Seitenwand kann es sich um eine Wand des Futterstandes oder der Stallbox handeln. Der zumindest eine Halteabschnitt kann an dem zumindest einen Bodenelement angeordnet und/oder an diesem befestigt sein. Alternativ kann der zumindest eine Halteabschnitt an der Seitenwand angeordnet und/oder an dieser befestigt sein.

Des Weiteren kann zumindest ein Abstandselement vorgesehen sein. Das zumindest eine Abstandselement kann an der der Futteraufnahmefläche gegenüberliegenden Fläche angeordnet sein. Beispielsweise kann das zumindest eine Bodenelement auf dem zumindest einen Abstandselement positioniert und/oder aufgelegt sein. Zusätzlich oder alternativ kann das zumindest eine Abstandselement mit dem zumindest einen Bodenelement, insbesondere an der der Futteraufnahmefläche gegenüberliegenden Fläche, verbunden sein. In einer bevorzugten Variante kann das zumindest eine Abstandselement an der der Futteraufnahmefläche gegenüberliegenden Fläche des zumindest einen Bodenelements befestigt sein, beispielsweise mittels Schrauben und/oder einer Klebeverbindung. Es können auch mehrere Abstandselemente vorgesehen sein. Vorzugsweise können die mehreren Abstandselemente an dem zumindest einen Bodenelement verteilt und/oder zueinander beabstandet angeordnet sein, beispielsweise so, dass ein Kippen des zumindest einen Bodenelements verhindert wird.

In einer Variante kann das zumindest eine Bodenelement in der Höhe verstellbar sein. Hierzu können Mittel zur Höhenverstellung des zumindest einen Bodenelements vorgesehen und/oder an dem zumindest einen Bodenelement angebracht sein. Das Mittel zur Höhenverstellung kann beispielsweise eine Spindel und/oder eine Kurbel und/oder einen Motor aufweisen.

In einer weiteren Variante kann ein Schwenkmechanismus vorgesehen sein. Der Schwenkmechanismus kann ausgebildet sein, das zumindest eine Bodenelement von einer ersten Position in eine zweite Position zu verschwenken. Bei der ersten Position kann es sich um die Normalposition des Futterbodens handeln, in der das Futtermittel bereitgestellt werden kann. Bei der zweiten Position kann es sich um eine Reinigungsposition handeln, in der Partikelaufnahmeraum, insbesondere der Raum unterhalb des Futterbodens bzw. des zumindest einen Bodenelements, für einen Benutzer zu Wartungs- und/oder Reinigungszwecke zugänglich ist. Beispielsweise kann der Schwenkmechanismus als Klappmechanismus ausgebildet sein. Ferner kann der Schwenkmechanismus bzw. Klappmechanismus zumindest ein Federelement aufweisen. In einer weiteren Variante kann zumindest ein Griffelement vorgesehen sein, das zum Anheben und/oder Hochziehen des Futterbodens und/oder des zumindest einen Bodenelements ausgebildet ist. Das zumindest eine Griffelement kann an dem Futterboden und/oder an dessen zumindest einen Bodenelement befestigt sein. Zum Beispiel kann das zumindest eine Griffelement als Schlaufe, Handgriff oder Knauf ausgebildet sein.

Des Weiteren kann zumindest eine Wandung vorgesehen sein. Die zumindest eine Wandung kann als Wandelement, Blende oder Blendleiste ausgebildet sein. In einer bevorzugten Variante kann die zumindest eine Wandung an dem zumindest einen Bodenelement, beispielsweise an einer Seite, angebracht sein. Beispielsweise kann vollständig umlaufen oder zumindest abschnittsweise umlaufend eine Wandung an dem zumindest einen Bodenelement angebracht sein. Die zumindest eine Wandung kann mit dem zumindest einen Bodenelement verbunden sein, beispielsweise derart, dass der Partikelaufnahmeraum durch die zumindest eine Wandung zumindest abschnittsweise begrenzt ist. Die zumindest eine Wandung kann sich in Richtung zum Boden des Futterstands oder zum Boden der Stallbox hin erstrecken. Mittels der zumindest einen Wandung kann verhindert werden, dass Partikel den Partikelaufnahmeraum ungewollt verlassen.

Gemäß einem weiteren Aspekt ist ein Futterstand zur Fütterung von Tieren, insbesondere von Pferden, vorgesehen. Der Futterstand umfasst zumindest einen Futterboden. Der Futterboden kann wie vorstehend und/oder nachfolgend Beschreiben ausgebildet sein. Der Futterstand kann einen durch den Futterboden von einem Partikelaufnahmeraum abgetrennten Futteraufnahmeraum aufweisen. Der Futteraufnahmeraum kann derart ausgebildet sein, dass Futtermittel, wie Rauh- oder Grünfutter, zur Verfütterung bereitgestellt werden kann. Der Futteraufnahmeraum kann auch ein Futtervorratsraum zum Bevorraten des bereitgestellten Futtermittels sein. Der Futterboden und/oder das zumindest eine Bodenelement des Futterbodens kann ferner vom Boden des Futterstands beabstandet sein. Dabei kann der Partikelaufnahmeraum zwischen dem Futterboden bzw. dem zumindest einen Bodenelement des Futterbodens und dem Boden des Futterstands gebildet sein. Ferner kann der zumindest eine Futterboden und/oder dessen zumindest eine Bodenelement im Wesentlichen horizontal angeordnet und/oder ausgerichtet sein.

Der Futterstand kann eine Zugangsseite zum Zuführen und/oder Bereitstellen von Futtermittel umfassen. Ferner kann der Futterstand Seitenwände aufweisen und/oder durch Seitenwände einer Stallbox zumindest abschnittsweise ausgebildet sein. In einer bevorzugten Variante kann der Futterstand derart ausgebildet sein, dass ein Tierkopf, insbesondere Pferdekopf, zur Futteraufnahme in den Futteraufnahmeraum gelangen kann. Hierzu kann eine Futterentnahmeöffnung vorgesehen sein.

Die Futterentnahmeöffnung kann in einer Seitenwand des Futterstandes oder der Stallbox vorgesehen sein, beispielsweise als Ausnehmung, Durchbruch oder Fenster in der Seitenwand. In einer Variante kann ein Schließelement vorgesehen sein. Das Schließelement kann an der die Futterentnahmeöffnung aufweisende Seitenwand angebracht sein. Beispielsweise kann das Schließelement als Klappe, Schieber oder Türelement ausgebildet sein. Bevorzugt kann das Schließelement zwischen einer geöffneten Stellung, in es die Futterentnahmeöffnung offen bzw. frei lässt, und einer verschlossenen Stellung, in der es die Futterentnahmeöffnung verschließt, beweglich sein. Hierfür kann das Schließelement mit einer Antriebsmechanik und/oder einem Antrieb wirksam verbunden sein. Zum Beispiel kann ein Motor zum Bewegen des Schließelements vorgesehen sein. Der Motor kann mit einer Steuereinrichtung zum Steuern des Motors verbunden sein. Zum Einstellen von Fütterungszeiten kann die Steuereinrichtung eine Zeitschaltuhr aufweisen. Somit kann mittels des Schließelements die Futterentnahmeöffnung temporär verschlossen oder geöffnet werden. Die Zeiten, in denen das Tier bzw. Pferd seinen Kopf durch die Futterentnahmeöffnung stecken und damit vom Futtermittel fressen kann, können dadurch gezielt begrenzt und/oder eingestellt werden. Das hat den Vorteil, dass das Tier bzw. Pferd nicht ständig vom hinter der Seitenwand im Futteraufnahmeraum gelagerten Futtermittel fressen kann, um eine unerwünschte Gewichtszunahme und/oder gesundheitliche Probleme zu vermeiden.

Gemäß einem weiteren Aspekt ist eine Stallbox vorgesehen. Die Stallbox kann eine Pferdebox sein oder als Pferdebox ausgebildet sein. Die Stallbox kann einen Stellplatz für das Tier, insbesondere für ein Pferd, aufweisen. In einer Variante kann die Stallbox in einen Stellplatz für das Tier, insbesondere für ein Pferd, und in einen Futteraufnahmeraum unterteilt sein. Ferner kann die Stallbox zumindest einen Futterboden umfassen, der wie vorstehend und/oder nachfolgend beschrieben ausgebildet ist. Alternativ kann die Stallbox einen Futterstand umfassen. Der Futterstand kann wie vorstehend und/oder nachfolgend beschrieben ausgebildet sein. Der Partikelaufnahmeraum kann von dem Stellplatz, beispielsweise durch zumindest eine Wandung oder Seitenwand, abgetrennt sein. Die Wandung kann wie vorstehend und/oder nachfolgend beschrieben, z.B. als Blende, Blendleiste oder Seitenwand, ausgebildet sein. Ferner kann der Futteraufnahmeraum von dem Stellplatz, beispielsweise durch zumindest eine Seitenwand, abgetrennt sein.

Mit der Erfindung können Staub, wie Futterstaub, und/oder andere Fremdpartikel effektiv vom Futtermittel separiert werden. Die Staubbelastung und/oder Fremdpartikelbelastung beim Fressen kann hierdurch minimiert werden. Ferner kann eine durch Staub- oder Fremdpartikel verursachte Gesundheitsgefährdung für das zu fütternde Tier deutlich reduziert werden. Erkrankungen, wie Atemwegserkrankungen, des Tiers bzw. Pferds können verhindert werden. Die Gesundheit und das Wohlbefinden des Tiers kann somit gesteigert werden.

Nachfolgend werden Ausführungsbeispiele der Erfindung unter Bezugnahme auf Figuren näher beschrieben, dabei zeigen schematisch und beispielhaft:
- Fig. 1: eine Variante eines Futterbodens für einen Futterstand;
- Fig. 2: den Futterboden gemäß Fig. 1 in einer perspektivischen Ansicht;
- Fig. 3: den Futterboden gemäß Fig. 1 in einer Ansicht von unten;
- Fig. 4: eine Variante eines Futterstands einer Stallbox;
- Fig. 5: eine weitere Variante eines Futterbodens in einer perspektivischen Ansicht;
- Fig. 6: den Futterboden gemäß Fig. 5 in einer weiteren Ansicht;
- Fig. 7: den Futterboden gemäß Fig. 5 in einer Detailansicht;
- Fig. 8: schematisch ein Variante einer Ausnehmungen des Futterbodens; und
- Fig. 9: schematisch ein weitere Variante einer Ausnehmungen des Futterbodens.

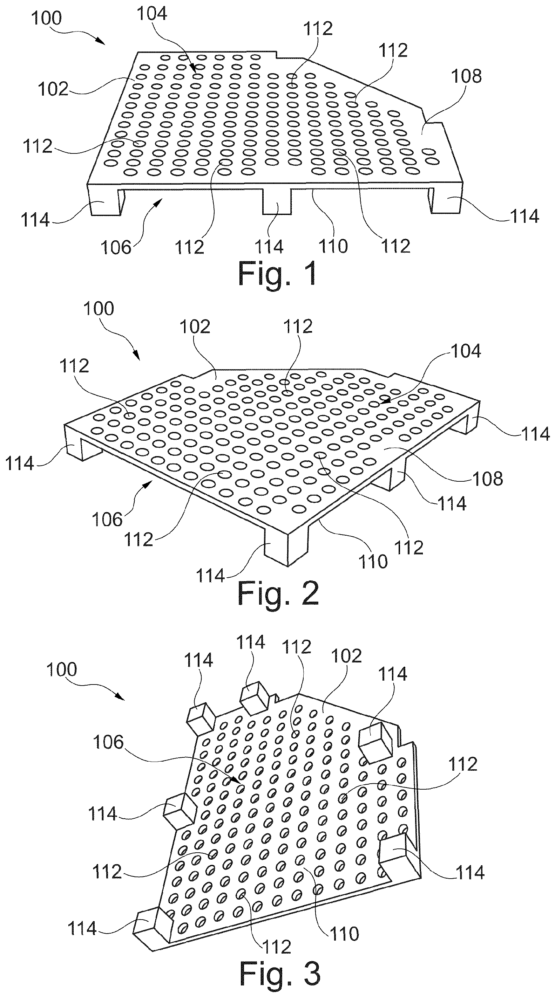

Fign. 1 bis 3 zeigen in verschiedenen Ansichten eine Variante eines Futterbodens 100 für einen Futterstand zur Fütterung von Tieren, insbesondere von Pferden. Der Futterboden 100 umfasst zumindest ein Bodenelement 102. Im vorliegenden Ausführungsbeispiel umfasst der Futterboden 100 ein einziges Bodenelement 102. Der Futterboden 100 ist damit im Wesentlichen einstückig aus einem einzigen Bodenelement 102 gebildet. Das Bodenelement 102 ist zum Abtrennen eines Futteraufnahmeraums 104 von einem Partikelaufnahmeraum 106 ausgebildet.

Ferner weist das Bodenelement eine dem Futteraufnahmeraum 104 zugewandte Futteraufnahmefläche 108 zur Aufnahme eines Futtermittels und eine der Futteraufnahmefläche 108 gegenüberliegende Fläche 110 auf. Der Futterboden 100 umfasst nun mehrere Ausnehmungen 112, die sich derart von der Futteraufnahmefläche 108 zu der der Futteraufnahmefläche 108 gegenüberliegenden Fläche 110 erstrecken, dass Partikel aus dem Futteraufnahmeraum 104 in den Partikelaufnahmeraum 106 gelangen. Die im Futteraufnahmeraum vorhandenen Staub- oder Fremdpartikel können somit durch die Ausnehmungen 112 hindurch in den darunterliegenden Partikelaufnahmeraum 106 gelangen, wodurch die Staub- und Fremdpartikelbelastung im darüberliegenden Futteraufnahmeraum 104 und damit auch im Futtermittel reduziert wird.

In der in Fign. 1 bis 3 dargestellten Ausführungsform sind die Ausnehmungen 112 als kreislochförmige Durchgangsöffnungen in dem Bodenelement 102 ausgebildet, die zueinander beabstandet angeordnet sind. Ferner ist das Bodenelement 102 als Bodenplatte ausgebildet, wobei die Futteraufnahmefläche 108 und die der Futteraufnahmefläche 108 gegenüberliegende Fläche 110 parallel zueinander ausgerichtet sind. Die Futteraufnahmefläche 108 bildet dabei eine Oberseite und die der Futteraufnahmefläche 108 gegenüberliegende Fläche 110 eine Unterseite 110 der Bodenplatte 102. An der der Futteraufnahmefläche 108 gegenüberliegenden Fläche 110 bzw. an der Unterseite 110 der Bodenplatte 102 sind Abstandselemente 114 vorgesehen. Die Abstandselemente 114 definieren die Höhe, insbesondere des Partikelaufnahmeraums 106, bzw. den Abstand zwischen der Unterseite 110 der Bodenplatte 102 und dem Boden des Futterstands. Die Abstandselemente 114 können an der Unterseite 110 der Bodenplatte 102, beispielsweise mittels Schrauben, befestigt sein.

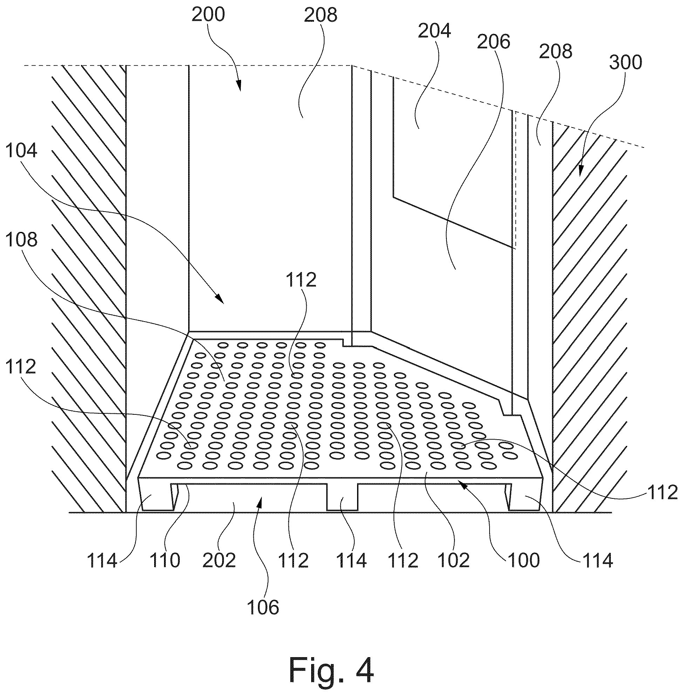

Fig. 4 zeigt eine Variante eines Futterstands 200 einer Stallbox 300. Der Futterstand 200 dient zur Fütterung von Tieren, insbesondere von Pferden, die in der Stallbox 200 eingestellt sind. Die Stallbox 300 kann somit als Pferdebox ausgebildet sein. Der Futterstand 200 ist hier im Wesentlichen in die Stallbox 300 integriert und von außen, d.h. von außerhalb der Stallbox 300, zugänglich, um Futtermittel, wie Rauh- oder Grünfutter, im Futterstand 200 dem in der Stallbox eingestellten Tier zum Fressen bereitzustellen.

Der Futterstand 200 umfasst den Futteraufnahmeraum 104 sowie den mit Bezug zu Fign. 1 bis 3 beschriebenen Futterboden 100, der den Futteraufnahmeraum 104 des Futterstands 200 von dem Partikelaufnahmeraum 106 abtrennt. In dem Futteraufnahmeraum 104 kann das Futtermittel auf der Futteraufnahmefläche 108 des Futterbodens 100 bereitgestellt und/oder auf der Futteraufnahmefläche 108 positioniert werden. Der Futterboden 200 ist im Wesentlichen horizontal angeordnet. Dabei steht der Futterboden 100 mit seinen Abstandselementen 114 auf dem Boden 202 des Futterstands 200, so dass das Bodenelement 102 des Futterbodens 100 vom Boden 202 des Futterstands 200 beabstandet ist und der Partikelaufnahmeraum 106 zwischen dem Bodenelement 102 des Futterbodens 100 und dem Boden 202 des Futterstands 200 gebildet ist. Ferner ist der Futterstand 200 derart ausgebildet, dass ein Tierkopf, insbesondere Pferdekopf, zur Futteraufnahme in den Futteraufnahmeraum 104 gelangen kann. Hierzu umfasst der Futterstand 200 eine Futterentnahmeöffnung 204 in einer Seitenwand 206 des Futterstands 200. Ein in die Stallbox 300 eingestelltes Tier kann somit seinen Kopf durch die Futterentnahmeöffnung 204 stecken und das im Futteraufnahmeraum 104 vorhandene Futtermittel fressen. Die Stallbox 300 ist somit in einen Futteraufnahmeraum104 und einen Stellplatz für das Tier, insbesondere Pferd, unterteilt. Ferner ist der Partikelaufnahmeraum 106 von dem Stellplatz durch die Seitenwand 206 und an diese angrenzende Seitenwände 208 abgetrennt.

Mittels des Futterbodens 100 kann die Staub- und Fremdpartikelbelastung im darüberliegenden Futteraufnahmeraum 104 und damit auch im Futtermittel signifikant reduziert werden. Das Tier, das sich auf dem Stellplatz der Stallbox 300 befindet und seinen Kopf durch die Futterentnahmeöffnung 204 steckt, um vom im Futterstand 200 vorhandenen Futtermittel zu fressen, ist dadurch einer geringeren gesundheitlichen Gefährdung ausgesetzt. Insbesondere können Atemwegserkrankungen verhindert oder das Risiko einer Erkrankung zumindest stark reduziert werden.

Im Übrigen wird ergänzend insbesondere auf Fign. 1 bis 3 und die zugehörige Beschreibung verwiesen.

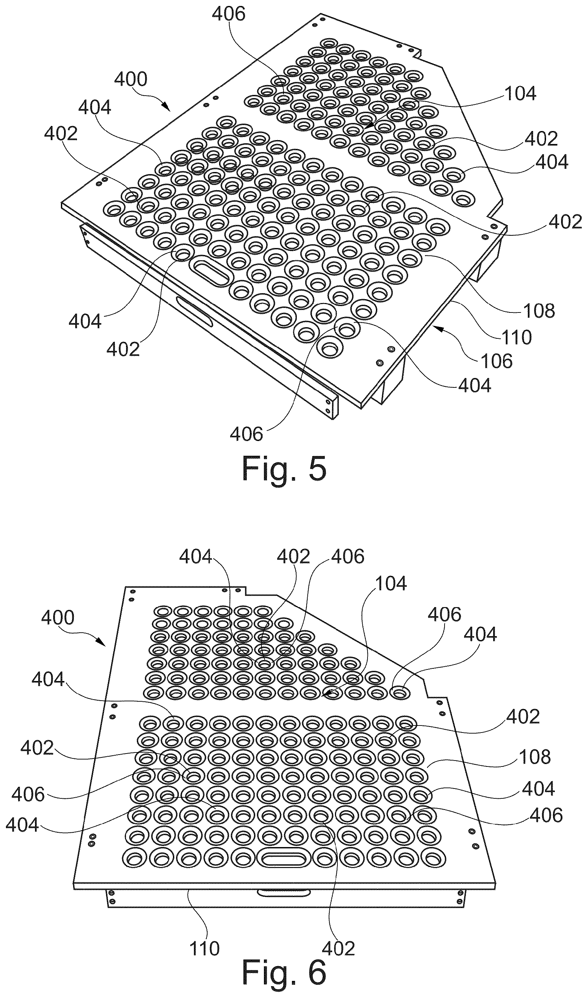

Fign. 5 bis 7 zeigen in verschiedenen Ansichten eine weitere Variante eines Futterbodens 400. Der Futterboden 400 entspricht im Wesentlichen dem mit Bezug zu Fign. 1 bis 4 beschriebenen Futterboden 100. Der Futterboden 400 weist auch mehrere Ausnehmungen 402 auf, die sich derart von der Futteraufnahmefläche 108 zu der der Futteraufnahmefläche 108 gegenüberliegenden Fläche 110 erstrecken, dass Partikel aus dem Futteraufnahmeraum 104 in den Partikelaufnahmeraum 106 gelangen.

In der in Fig. 5 bis 7 dargestellten Ausführungsform sind die Ausnehmungen 402 als kreislochförmige Durchgangsöffnungen, die eine Abrundung 404 aufweisen, ausgebildet. Die Abrundungen 404 sind im Bereich der Futteraufnahmefläche 108 bzw. an den der Futteraufnahmefläche 108 zugewandten Enden 406 der Ausnehmungen 402 vorgesehen.

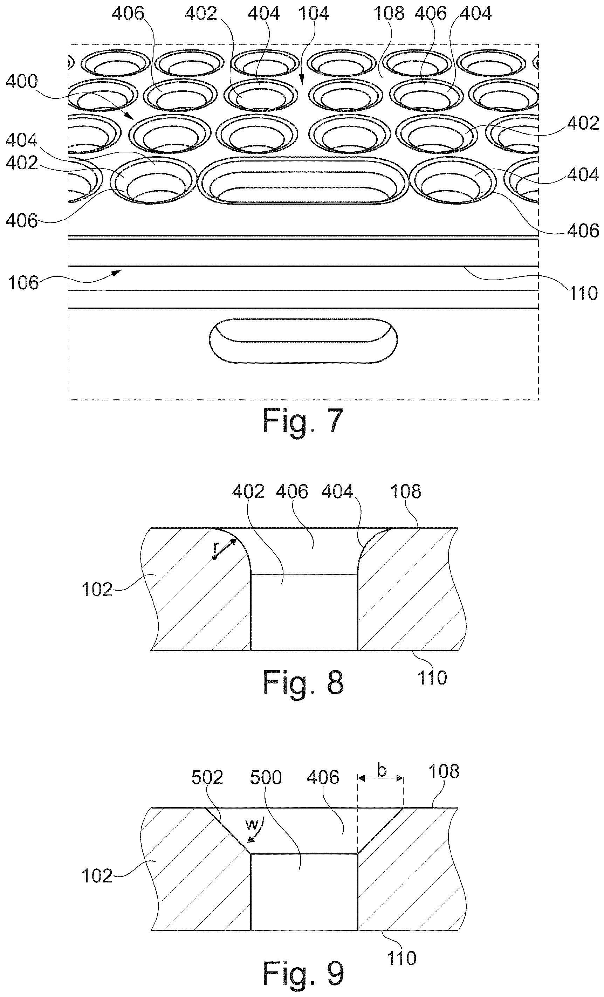

Eine solche Ausnehmung 402 ist schematisch in Fig. 8 in einer Schnittdarstellung gezeigt. Die Abrundung 404 der Ausnehmung 402 ist durch einen Radius r definiert. Der Radius r kann zwischen 1 mm und 15 mm, beispielsweise zwischen 3 mm und 12 mm, vorzugsweise zwischen 6 mm und 12 mm, bevorzugt 8 mm, betragen.

Im Übrigen wird ergänzend insbesondere auf Fign. 1 bis 4 und die zugehörige Beschreibung verwiesen.

In Fig. 9 ist eine zur Ausnehmung 402 alternative Ausnehmung 500 in einer Schnittdarstellung dargestellt. Die Ausnehmung 500 ist ebenfalls als kreislochförmige Durchgangsbohrung ausgestaltet, weist jedoch an ihrem Ende 406 eine Phase 502 auf. Die Phase 402 ist hier als schräge Kante ausgebildet und durch einen Winkel w und eine Breite b definiert. Der Winkel w der Phase 502 kann zwischen 30° und 60° liegen. Beispielsweise kann der Winkel w 45° betragen. Die Breite b der Phase 502 kann vorzugsweise 1 mm bis 10 mm betragen.

Im Übrigen wird ergänzend insbesondere auf Fign. 1 bis 8 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Futterboden
- 102: Bodenelement / Bodenplatte
- 104: Futteraufnahmeraum
- 106: Partikelaufnahmeraum
- 108: Futteraufnahmefläche / Oberseite
- 110: gegenüberliegende Fläche / Unterseite
- 112: Ausnehmungen
- 114: Abstandselemente

- 200: Futterstand
- 202: Boden
- 204: Futterentnahmeöffnung
- 206: Seitenwand
- 208: angrenzende Seitenwände

- 300: Stallbox / Pferdebox

- 400: Futterboden
- 402: Ausnehmungen
- 404: Abrundungen der Ausnehmungen
- 406: Enden der Ausnehmungen

- 500: Ausnehmung
- 502: Phase

- r: Radius der Abrundung
- w: Winkel der Phase
- b: Breite der Phase

## Patentansprüche

1. Futterboden (100, 400) für einen Futterstand (200) zur Fütterung von Tieren, insbesondere von Pferden, umfassend zumindest ein Bodenelement (102), das zum Abtrennen eines Futteraufnahmeraums (104) von einem Partikelaufnahmeraum (106) ausgebildet ist, wobei das zumindest eine Bodenelement (102) eine dem Futteraufnahmeraum (104) zugewandte Futteraufnahmefläche (108) zur Aufnahme eines Futtermittels und wenigstens eine Ausnehmung (112, 402, 500) aufweist, die sich derart von der Futteraufnahmefläche (108) zu einer der Futteraufnahmefläche (108) gegenüberliegenden Fläche (110) erstreckt, dass Partikel aus dem Futteraufnahmeraum (104) in den Partikelaufnahmeraum (106) gelangen.

2. Futterboden (100, 400) nach Anspruch 1, **dadurch gekennzeichnet, dass** die wenigstens eine Ausnehmung (112, 402, 500) als Durchgangsöffnung in dem zumindest einen Bodenelement (102) ausgebildet ist.

3. Futterboden (100,400) nach wenigstens einem der vorhergehenden Ansprüche, **dadurch gekennzeichnet, dass** die wenigstens eine Ausnehmung (112, 402, 500) als Loch, wie Kreisloch oder Langloch, oder als eckiger Durchbruch ausgebildet ist.

4. Futterboden (100, 400) nach wenigstens einem der vorhergehenden Ansprüche, **dadurch gekennzeichnet, dass** die wenigstens eine Ausnehmung (112, 402, 500), insbesondere im Bereich der Futteraufnahmefläche (108) und/oder an einem der Futteraufnahmefläche (108) zugewandten Ende (406), zumindest eine Phase (502) und/oder Abrundung (404) aufweist.

5. Futterboden (100, 400) nach wenigstens einem der vorhergehenden Ansprüche, **dadurch gekennzeichnet, dass** das zumindest ein Bodenelement (102) im Wesentlichen als Bodenplatte (102), Lochplatte oder Gitter ausgebildet ist.

6. Futterboden (100, 400) nach wenigstens einem der vorhergehenden Ansprüche, **dadurch gekennzeichnet, dass** der Futterboden (100) einstückig aus einem einzigen Bodenelement (102) gebildet ist, oder dass mehrere Bodenelemente (102) vorgesehen sind, die miteinander verbindbar ausgebildet oder miteinander verbunden sind.

7. Futterboden (100, 400) nach wenigstens einem der vorhergehenden Ansprüche, **dadurch gekennzeichnet, dass** zumindest ein Halteabschnitt vorgesehen ist, der zum Fixieren des zumindest einen Bodenelements (102) an einer Seitenwand (206, 208) ausgebildet ist.

8. Futterboden (100, 400) nach wenigstens einem der vorhergehenden Ansprüche, **dadurch gekennzeichnet, dass** zumindest ein Abstandselement (114) vorgesehen ist, das an der der Futteraufnahmefläche (108) gegenüberliegenden Fläche (110) angeordnet ist, und/oder das mit dem zumindest einen Bodenelement (102), insbesondere an der der Futteraufnahmefläche (108) gegenüberliegenden Fläche (110), verbunden ist.

9. Futterboden (100, 400) nach wenigstens einem der vorhergehenden Ansprüche, **dadurch gekennzeichnet, dass** das zumindest eine Bodenelement (102) in der Höhe verstellbar ist und/oder dass Mittel zur Höhenverstellung des zumindest einen Bodenelements (102) vorgesehen sind, und/oder dass ein Schwenkmechanismus vorgesehen ist, der ausgebildet ist, das zumindest eine Bodenelement (102)von einer ersten Position in eine zweite Position zu verschwenken.

10. Futterboden (100, 400) nach wenigstens einem der vorhergehenden Ansprüche, **dadurch gekennzeichnet, dass** zumindest eine Wandung, insbesondere eine Blende oder Blendleiste, vorgesehen ist, die an dem zumindest einen Bodenelement (102), vorzugsweise an einer Seite, angebracht ist.

11. Futterstand (200) zur Fütterung von Tieren, insbesondere von Pferden, umfassend zumindest einen Futterboden (100, 400) nach wenigstens einem der vorhergehenden Ansprüche, wobei der Futterstand (200) einen durch den Futterboden (100, 400) von einem Partikelaufnahmeraum (106) abgetrennten Futteraufnahmeraum (104) aufweist.

12. Futterstand (200) nach Anspruch 11, **dadurch gekennzeichnet, dass** der Futterstand (200) derart ausgebildet ist, dass ein Tierkopf, insbesondere Pferdekopf, zur Futteraufnahme in den Futteraufnahmeraum (104), insbesondere durch eine Futterentnahmeöffnung (204), gelangt.

13. Futterstand (200) nach Anspruch 11 oder 12, **dadurch gekennzeichnet, dass** der Futterboden (100, 400) und/oder das zumindest eine Bodenelement (102) des Futterbodens (100, 400) vom Boden (202) des Futterstands (200) beabstandet ist und der Partikelaufnahmeraum (106) zwischen dem Futterboden (100, 400) bzw. dem zumindest einen Bodenelement (102) des Futterbodens (100, 400) und dem Boden (202) des Futterstands (200) gebildet ist, und/oder dass der zumindest eine Futterboden (100, 400) im Wesentlichen horizontal angeordnet ist.

14. Stallbox (300), insbesondere Pferdebox (300), mit einem Futterstand (200) nach wenigstens einem der vorhergehenden Ansprüche 11 bis 13, wobei die Stallbox (300) in einen Futteraufnahmeraum (104) und einen Stellplatz für das Tier, insbesondere Pferd, unterteilt ist.

15. Stallbox (300) nach Anspruch 14, **dadurch gekennzeichnet, dass** der Partikelaufnahmeraum (106) von dem Stellplatz, insbesondere durch zumindest eine Wandung oder Seitenwand, abgetrennt ist.
